# EUROPÄISCHE PATENTSCHRIFT

(11) **EP 3 426 108 B1**
(45) Veröffentlichungstag und Bekanntmachung des Hinweises auf die Patenterteilung: **29.04.2020**
(21) Anmeldenummer: 17710206.8
(22) Anmeldetag: 09.03.2017
(51) Int. Cl.: A47J 31/44, A47J 31/46

(54) **MILCHAUFSCHÄUMER MIT RÜCKKOPPLUNGSKREISLAUF**
MILK FOAMING DEVICE HAVING A RETURN LOOP
MOUSSEUR DE LAIT COMPORTANT UN CIRCUIT DE RETOUR

(30) Priorität: 10.03.2016 DE 102016104404
(43) Veröffentlichungstag der Anmeldung: 16.01.2019
(73) Patentinhaber: Übermorgen Innovations GmbH, 52070 Aachen (DE)
(72) Erfinder: ZWICK, Boris, 76297 Stutensee (DE)
(74) Vertreter: von Bülow & Tamada
(86) Internationale Anmeldenummer: PCT/EP2017/055572
(87) Internationale Veröffentlichungsnummer: WO 2017/153533

(56) Entgegenhaltungen:
- DE-A1-102008 058 934

## Beschreibung

Die vorliegende Erfindung betrifft einen Milchaufschäumer.

Ein Milchaufschäumer ist aus der DE 10 2008 058 934 B4 bekannt. Der Milchaufschäumer umfasst einen Milchkanal zum Leiten von Milch in einer Milchflussrichtung von einem Milchbehälter zu einem Milchauslasskopf, einen Schäumungsabschnitt im Milchkanal zum Umwandeln der Milch im Milchkanal in einen Luft enthaltenden Milchschaum und ein Temperierelement zum Temperieren des Milchschaums aus dem Schäumungsabschnitt.

Die DE 10 2008 058 934 B4 lehrt, den Fluss des Milchschaums im Milchkanal nach dem Temperierelement mit einem Magnetventil zu unterbrechen.

Aufgabe der Erfindung ist, den bekannten Milchaufschäumer zu verbessern.

Gemäß einem Aspekt der Erfindung, umfasst ein Milchaufschäumer einen Milchkanal zum Leiten von Milch in einer Milchflussrichtung von einem Milchbehälter zu einem Milchauslasskopf, einen Schäumungsabschnitt im Milchkanal zum Umwandeln der Milch im Milchkanal in einen Luft enthaltenden Milchschaum, ein Temperierelement zum Temperieren des Milchschaums aus dem Schäumungsabschnitt und einem Rückleitungskanal, der sich vom Milchkanal zwischen dem Temperierelement und dem Milchauslasskopf abzweigt und in der Milchflussrichtung gesehen zu einer Stelle im Milchkanal vor dem Temperierelement führt.

Dem angegebenen Milchaufschäumer liegt die Überlegung zugrunde, dass die Unterbrechung des Milchflusses im Stand der Technik dazu führt, dass die Milch und/oder der Milchschaum im Temperierelement stehen bleibt. Dass kann dazu führen, dass die Milch durch die Unterbrechung des Milchflusses chemisch verändert wird und beispielsweise verbrennt. Entsprechende Ablagerungen, wie Verbrennungsrückstände im Milchaufschäumer, werden dann entweder beim erneuten Einschalten mit dem Milchfluss herausgespült oder verschmutzen den Milchaufschäumer über kurz oder lang.

Hier greift der angegebene Milchaufschäumer mit dem Vorschlag an, den Milchfluss nicht zu unterbrechen, sondern mit einem Rückkopplungskreislauf weiter zirkulieren zu lassen. Hierzu ist der Rückleitungskanal ausgebildet, über den der Milchfluss auch nach dem Abschalten des Milchaufschäumers zumindest solange aufrecht erhalten werden kann, bis sich das Temperierelement auf ausreichende Lagerbedingungen eingestellt hat, damit sich keine Rückstände bilden.

In einer Weiterbildung umfasst der angegebene Milchaufschäumer ein Absperrelement, das eingerichtet ist, den Rückleitungskanal zu verschließen. Auf diese Weise kann der Rückleitungskanal im Normalbetrieb, das heißt wenn der Milchaufschäumer zum Aufschäumen von Milch verwendet wird, wirkungslos gemacht werden.

In einer vorteilhaften Weiterbildung des angegebenen Milchaufschäumers ist das Absperrelement ein Weichenelement zum Führen des Milchschaums entweder zum Milchauslasskopf oder in den Rückleitungskanal. Auf diese Weise kann der Milchfluss gezielt gesteuert werden.

In einer besonders vorteilhaften Weiterbildung umfasst der angegebene Milchaufschäumer ein weiteres Weichenelement, das eingerichtet ist, den Milchkanal entweder zum Rückleitungskanal oder zum Milchbehälter hin zu öffnen. Alternativ kann das weitere Weichenelement auch statt dem ersten Weichenelement verwendet werden. Besonders günstig an dieser Lösung ist, dass hier auf ein Rückschlagventil verzichtet werden kann, das notwendig wäre zu vermeiden, dass der Milchaufschäumer nach dem Abschalten vor dem Schäumungsabschnitt und/oder dem Temperierelement nicht leerläuft.

In einer bevorzugten Weiterbildung des angegebenen Milchaufschäumers ist das Weichenelement und/oder das weitere Weichenelement ein Drei-Wege-Ventil, das sich mit wenig Bauraum sehr einfach in dem Milchkanal verbauen lässt.

In einer besonders bevorzugten Weiterbildung des angegebenen Milchaufschäumers ist das Drei-Wege-Ventil magnetisch und lässt sich mit einer hohen Schaltgeschwindigkeit verwenden.

In einer anderen Weiterbildung des angegebenen Milchaufschäumers führt im Schäumungsabschnitt in den Milchkanal eine Luftleitung zum Anreichern der Milch mit Luft. Diese Luftzuleitung kann beispielsweise basierend auf dem Venturi-Effekt verwendet werden. Auf diese Weise kann die zum Schäumen der Milch notwendige Luft sehr einfach in den Milchkanal geleitet werden.

In einer zusätzlichen Weiterbildung des angegebenen Milchaufschäumers umfasst der Schäumungsabschnitt in Milchflussrichtung gesehen nach der Luftleitung ein Verwirbelungselement zum Verwirbeln der Luft in der Milch. Dieses Verwirbelungselement kann zum Beispiel eine Zahnradpumpe sein, die so in einfacher Weise die mit Luft gemische Milch zum Milchschaum verwirbelt.

Dabei kann der Rückleitungskanal zwischen der Luftleitung und dem Verwirbelungselement in den Milchkanal führen, so dass das Verwirbelungselement auch gleichzeitig zum Aufrechterhalten des Milchflusses im Milchkanal und im Rückleitungskanal verwendet werden kann.

Die oben beschriebenen Eigenschaften, Merkmale und Vorteile dieser Erfindung sowie die Art und Weise, wie diese erreicht werden, werden verständlicher im Zusammenhang mit der folgenden Beschreibung der Ausführungsbeispiele, die im Zusammenhang mit der Zeichnung näher erläutert werden. Es zeigen:
- Fig. 1: eine perspektivische Ansicht eines Milchaufschäumers mit einem Milchauslasskopf,
- Fig. 2: eine Strukturansicht des Milchaufschäumers der Fig. 1,
- Fig. 3: eine Strukturansicht des Milchaufschäumers der Fig. 2 in einem ersten Funktionszustand, und
- Fig. 4: eine Strukturansicht des Milchaufschäumers der Fig. 2 in einem zweiten Funktionszustand.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

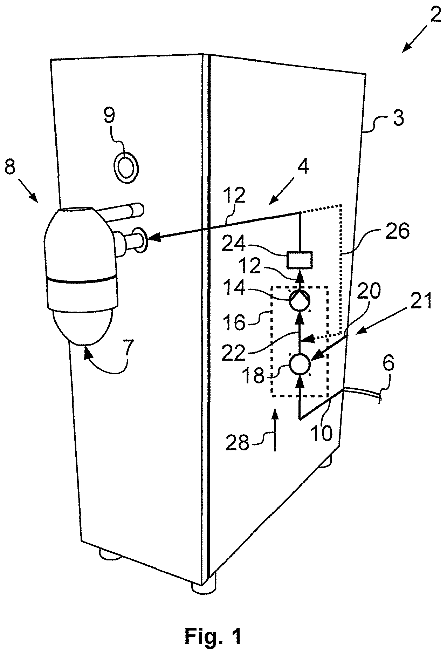

Es wird auf Fig. 1 Bezug genommen, die in einer perspektivischen Darstellung einen Milchaufschäumer 2 zeigt. Die einzelnen Elemente im Inneren des Milchaufschäumers 2 sind nur strukturell angedeutet.

Der Milchaufschäumer 2 umfasst einen sich durch ein Gehäuse 3 erstreckenden Milchkanal 4, der sich ausgehend von einem Milchansaugschlauch 6 bis zu einer Austrittsöffnung 7 eines Milchauslasskopfs 8 erstreckt. Im Betrieb des Milchaufschäumers 2 wird auf Druck eines Bedienknopfes 9 am Gehäuse 3 des Milchaufschäumers 2 über den Milchansaugschlauch 6 aus einem nicht weiter dargestellten Milchbehälter Milch 10 in den Milchkanal 4 angesaugt und zu einem Milchschaum 12 verarbeitet und an der Austrittsöffnung 7 am Milchauslasskopf 8 ausgegeben.

Zur Erzeugung des Milchschaumes 12 saugt eine Pumpe 14 in einem Schäumungsabschnitt 16 die Milch 10 an. Über eine vor der Pumpe 14 angeordnete Venturi-Düse 18 des Schäumungsabschnitts 16 wird die Milch 10 dabei mit Luft 20 über eine Luftleitung 21 angereichert, so dass in die Pumpe 14 mit Luft 20 durchsetzte Milch 22 eintritt und dort vermischt wird. Auf diese Weise entsteht grundsätzlich der Milchschaum 12. In einem sich anschließenden Temperierelement 24 wird dann der Milchschaum 12 nachbearbeitet und beispielsweise erwärmt, was zu einer Ausdehnung der sich im Milchschaum 12 befindlichen Luftbläschen und einer Stabilisierung des Milchschaumes 12 führt.

Weitere Details zum Milchaufschäumer 2 können der DE 10 2008 058 934 B4 entnommen werden. In dieser Druckschrift wird vorgeschlagen, den Milchfluss im Milchkanal 4 über ein Magnetventil zu unterbrechen. Dies hat jedoch den Nachteil, dass mit der Unterbrechung des Milchflusses der Milchschaum 12 in dem Temperierelement 24 stehen bleibt. Da das Temperierelement 24 in diesem Fall nicht schlagartig seine Temperatur ändern kann, kann der Milchschaum 12 dadurch beschädigt werden und beispielsweise verbrennen. Auf diese Weise können sich im Milchkanal 4 Ablagerungen bilden, die dann den Milchkanal 4 verunreinigen und/oder die beim Wiedereinschalten des Milchaufschäumers 2 dann mit dem Milchschaum 12 aus dem Milchauslasskopf 8 ausgegeben werden.

Hier greift das vorliegende Ausführungsbeispiel mit dem Vorschlag an, das Temperierelement 24 durch einen Rückflusskanal 26 zu überbrücken und den Milchschaum 12 in einer Flussrichtung 28 der Milch 10 beziehungsweise des Milchschaums 12 gesehen vor das Temperierelement 24 zurück in dem Milchkanal 4 zu speißen.

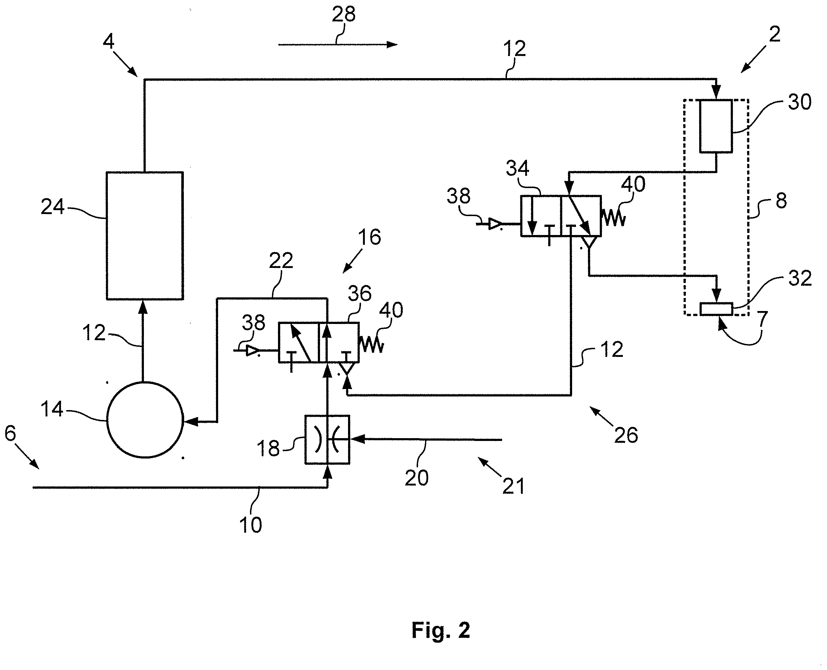

Dieser Gedanke soll nachstehend anhand eines in Fig. 2 gezeigten Strukturdiagramms des Milchaufschäumers 2 näher erläutert werden.

Der Rückflusskanal 26 beginnt in der vorliegenden Ausführung im Milchauslasskopf 8 zwischen einem ersten Filterelement 30 und einem zweiten Filterelement 32. Das erste Filterelement 30 ist in der Milchflussrichtung 28 gesehen vor dem zweiten Filterelement 32 angeordnet und beispielsweise als Filterkerze ausgeführt. Das zweite Filterelement 32 kann ein Filterplättchen sein.

Zwischen den beiden Filterelementen 30, 32 ist ein erstes Weichenelement 34 in Form eines magnetisch wirkenden Dreiwegeventils angeordnet. Das erste Weichenelement 34 empfängt den Milchschaum 12 aus dem ersten Filterelement 30 und leitet den Milchschaum 12 in Abhängigkeit seines Schaltzustandes entweder in den Rücklaufkanal 26 oder zum zweiten Filterelement 32. Im einzelnen wird der Milchschaum 12 im in Fig. 2 gezeigten ersten Schaltzustand des Weichenelementes 34 vom ersten Filterelement 30 zum zweiten Filterelement 32 geleitet. In einem zweiten, in Fig. 2 nicht dargestellten Schaltzustand wird der Michschaum 12 vom ersten Filterelement 30 in den Rücklaufkanal 12 geleitet.

Auf der anderen, dem ersten Weichenelement 34 gegenüberliegenden Seite des Rücklaufkanals 26 ist ein zweites Weichenelement 36 in Form eines magnetisch wirkenden Dreiwegeventils angeordnet, das in Abhängigkeit seines Schaltzustandes an die Pumpe 14 entweder Milch 10 aus dem Milchansaugschlauch 6 oder Milchschaum 12 aus dem Rücklaufkanal 26 weiterleitet. In dem in Fig. 2 gezeigten ersten Schaltzustand leitet das zweite Weichenelement 36 Milch 10 aus dem Milchansaugschlauch 6 an die Pumpe 14 weiter.

Die Schaltzustände der beiden Weichenelemente 34, 36 werden über ein Steuersignal 38 sowie ein Rückstellelement 40 eingestellt. Da die Funktionsweise magnetisch wirkender Dreiwegeventile grundsätzlich bekannt ist, soll auf eine ausführlichere Darstellung hierzu verzichtet werden.

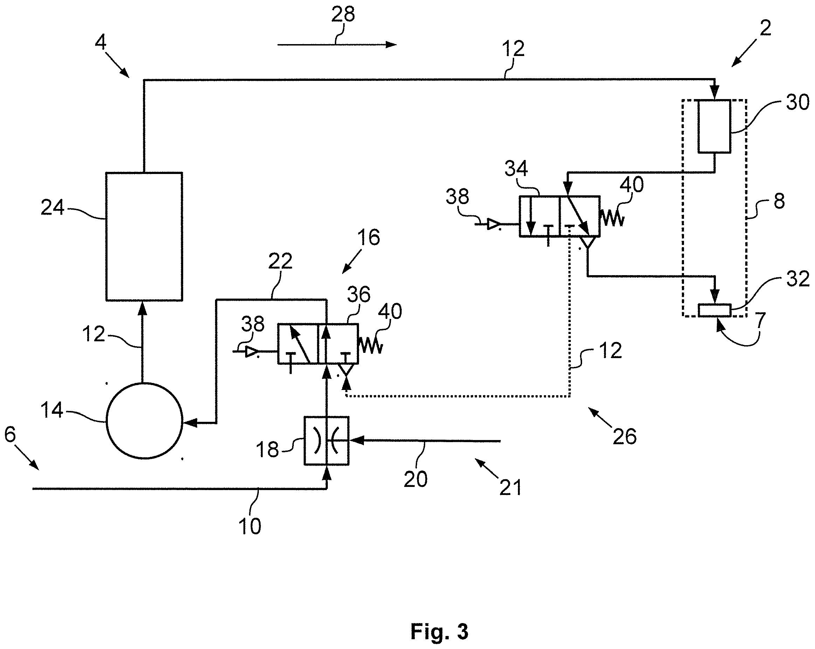

In Fig. 3 ist der Milchaufschäumer 2 in einem Funktionszustand dargestellt, in dem sich die beiden Weichenelemente 34, 36 im ersten Schaltzustand befinden. Die hierbei vom Milchfluss abgetrennten Bereiche des Milchaufschäumers 2, also der Rücklaufkanal 26, sind dabei gepunktet dargestellt.

Wie aus Fig. 3 zu sehen ist, wirkt der Milchaufschäumer 2 im ersten Schaltzustand der Weichenelemente 34, 36 in an sich bekannter Weise und leitet die Milch 4 durch den Schäumungsabschnitt 16 und gibt schließlich den Milchschaum 12 über die Auslassöffnung 7 am Milchauslasskopf 8 aus.

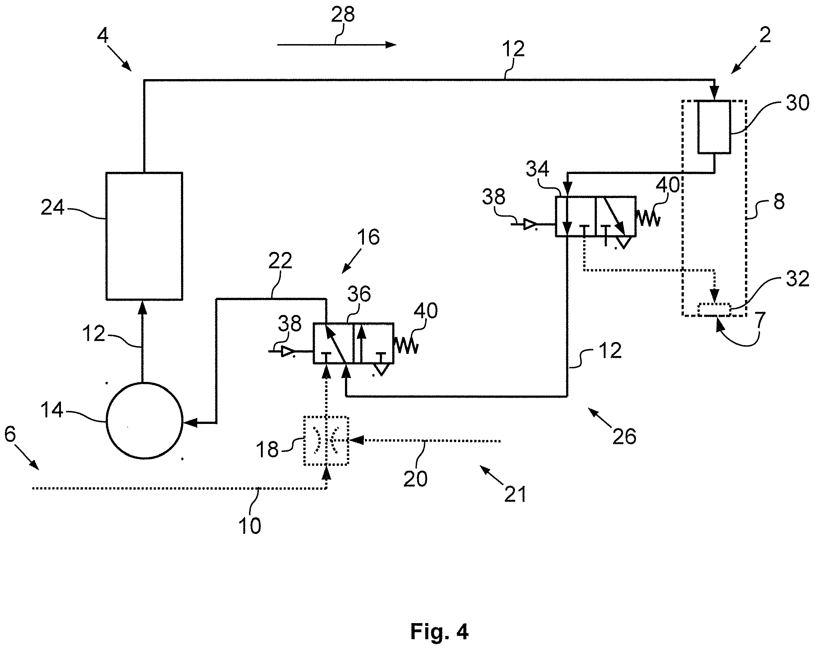

Sobald der Auslass des Milchschaumes 12 aus dem Milchauslasskopf 8 unterbunden werden soll, werden die beiden Weichenelemente 34, 36 mit dem Schaltsignal 38 in den zweiten Schaltzustand überführt, der in Fig. 4 zu sehen ist. Auch in Fig. 4 sind die vom Milchfluss abgetrennten Bereiche des Milchaufschäumers analog zur Fig. 3 gepunktet dargestellt.

Wie in der Fig. 4 zu sehen, fließt der Milchschaum 12 nun in einem Kreislauf, der sich aus dem Milchkanal 4 und dem Rücklaufkanal 26 zusammensetzt. In diesem Kreislauf 4, 26 passiert der Milchschaum 12 immer wieder das Temperierelement 24. Auf diese Weise wird vermieden, dass der Milchschaum 12 im Temperierelement 24 stehen bleibt und beispielsweise verbrennt, wenn das Temperierelement 24 noch zu heiß ist.

Durch das Anordnen von zwei Weichenelementen 34, 36 ist sichergestellt, dass im Funktionszustand der Fig. 4 der Kreislauf 4, 26 auch tatsächlich geschlossen ist, und dass kein Milchschaum 12 weder an der Seite des Milchansaugschlauches 6 noch auf der Seite des Milchauslasskopfes 8 aus dem Kreislauf entweichen kann.

Wenn lediglich vermieden werden soll, dass der Milchschaum 12 im Temperierelement 24 stehen bleibt, solange das Temperierelement 24 noch nicht seine Ruhetemperatur erreicht hat, reicht es grundsätzlich aus, dass nur das Temperierelement 24 mit dem Kreislauf 4, 26 überbrückt wird. Das Temperierelement 24 wirkt für den Kreislauf 4, 26 als thermodynamisches Antriebselement und bewegt den Milchschaum allein durch seine Temperaturdifferenz zur Umgebungstemperatur. Sobald das Temperierelement 24 seine Ruhetemperatur erreicht hat und der im Temperierelement 24 stehende Milchschaum 12 grundsätzlich nicht mehr durch das Temperierelement 24 beschädigt werden kann, wirkt der thermodynamische Antrieb von allein nicht mehr. Der Kreislauf 4, 26 schaltet sich daher von allein ab. Ein Blockieren des Milchflusses, wie in der DE 10 2008 058 934 B4, ist daher nicht notwendig.

Vorzugsweise sollte jedoch auch die Pumpe 14 mit in den Kreislauf 4, 26 eingebunden werden, wie dies in Fig. 4 dargestellt ist. Die Luft 10 ist im Milchschaum 12 nicht gelöst und trennt sich daher von dieser im Kreislauf 4, 26, wenn der Milchschaum 12 eine gewisse Zeit im Kreislauf 4, 26 stehen bleibt. Würde der Milchaufschäumer 2 dann wieder in den ersten Funktionszustand gemäß Fig. 3 überführt werden, dann würde aus dem Milchauslasskopf 8 zunächst nur Milch 10 und kein Milchschaum 12 ausgegeben werden.

Dies kann durch die Aufnahme der Pumpe 14 in den Kreislauf 4, 26 verhindert werden. Wenn sich die Milch 10 von der Luft 20 im Kreislauf 4, 26 nach einer längeren Standzeit getrennt hat, dann kann durch Betreiben des Milchaufschäumers 2 im Funktionszustand gemäß der Fig. 4 für mindestens eine Runde der Milchschaum 12 wieder hergestellt werden, bevor der Milchaufschäumer 2 in den Funktionszustand gemäß der Fig. 3 zurück überführt wird.

Im Ergebnis heißt das, dass der in Fig. 2 gezeigte Milchaufschäumer 2 zumindest vor einem völligen elektrischen Abschalten vom Funktionszustand gemäß der Fig. 3 in den Funktionszustand gemäß der Fig. 4 überführt werden sollte. Beim Wiedereinschalten des Milchaufschäumers 2 sollte dieser zunächst eine Weile im Funktionszustand der Fig. 4 betrieben werden, bevor dieser dann zur Ausgabe von Milchschaum 12 wieder in den Betriebszustand der Fig. 3 überführt wird.

Die beiden Filterelemente 30, 32 sind optional.

## Patentansprüche

1. Milchaufschäumer (2) mit
- einem Milchkanal (4) zum Leiten von Milch (10) in einer Milchflussrichtung (28) von einem Milchbehälter (6) zu einem Milchauslasskopf (8),
- einem Schäumungsabschnitt (16) zum Umwandeln der Milch (10) im Milchkanal (4) in einen Luft (20) enthaltenden Milchschaum (12), und
- einem Temperierelement (24) zum Temperieren des Milchschaums (12) aus dem Schäumungsabschnitt (16),
**gekennzeichnet durch**
- einen Rückleitungskanal (26), der sich vom Milchkanal (4) zwischen dem Temperierelement (24) und dem Milchauslasskopf (8) abzweigt und in der Milchflussrichtung (28) gesehen zu einer Stelle im Milchkanal (4) vor dem Temperierelement (24) führt.

2. Milchaufschäumer (2) nach Anspruch 1, umfassend ein Absperrelement (34), das eingerichtet ist, den Rückleitungskanal (12) zu verschließen.

3. Milchaufschäumer (2) nach Anspruch 2, wobei das Absperrelement (34) ein Weichenelement (34) zum Führen des Milchschaums (12) entweder zum Milchauslasskopf (8) oder in den Rückleitungskanal (12) ist.

4. Milchaufschäumer (2) nach Anspruch 3, umfassend ein weiteres Weichenelement (36), das eingerichtet ist, den Milchkanal (4) entweder zum Rückleitungskanal (26) oder zum Milchbehälter (6) hin zu öffnen.

5. Milchaufschäumer (2) nach Anspruch 3 oder 4, wobei das Weichenelement (34) und/oder das weitere Weichenelement (36) ein Drei-Wege-Ventil ist.

6. Milchaufschäumer (2) nach Anspruch 5, wobei das Drei-Wege-Ventil (34, 36) magnetisch ist.

7. Milchaufschäumer (2) nach einem der vorstehenden Ansprüche, wobei im Schäumungsabschnitt (16) in den Milchkanal (4) eine Luftleitung (21) zum Anreichern der Milch (10) mit Luft (20) führt.

8. Milchaufschäumer nach Anspruch 7, wobei der Schäumungsabschnitt (16) in Milchflussrichtung (28) gesehen nach der Luftleitung (21) ein Verwirbelungselement (14) zum Verwirbeln der Luft (20) in der Milch (10) umfasst.

9. Milchaufschäumer (2) nach Anspruch 8, wobei der Rückleitungskanal (26) zwischen der Luftleitung (21) und dem Verwirbelungselement (14) in den Milchkanal (4) führt.

## Claims

1. Milk frother (2) with
- a milk channel (4) for guiding milk (10) in a milk flow direction (28) from a milk container (6) to a milk outlet head (8),
- a foaming section (16) for converting the milk (10) in the milk channel (4) into an air (20) containing milk foam (12), and a tempering element (24) for tempering the milk foam (12) from the foaming section (16),
**characterizied in that**
- a return duct (26) which branches off from the milk duct (4) between the temperature control element (24) and the milk outlet head (8) and, viewed in the milk flow direction (28), leads to a point in the milk duct (4) in front of the temperature control element (24)

2. Milk frother (2) according to claim 1, comprising a shut-off element (34) which is set up to close the return duct (12).

3. Milk frother (2) according to claim 2, wherein the shut-off element (34) is a switch element (34) for guiding the milk foam (12) either to the milk outlet head (8) or in the return duct (12).

4. Milk frother (2) according to claim 3, comprising a further switch element (36) which is set up to open the milk channel (4) either to the return channel (26) or to the milk container (6).

5. Milk frother (2) according to claim 3 or 4, wherein the switch element (34) and/or the further switch element (36) is a three-way valve.

6. Milk frother (2) according to claim 5, wherein the three-way valve (34, 36) is magnetic.

7. Milk frother (2) according to any one of the preceding claims, wherein in the foaming section (16) in the milk channel (4) leads an air line (21) for enriching the milk (10) with air (20).

8. Milk frother according to claim 7, wherein the foaming section (16) in the milk flow direction (28) after the air line (21) comprises a swirling element (14) for swirling the air (20) in the milk (10).

9. Milk frother (2) according to claim 8, wherein the return duct (26) between the air line (21) and the swirling element (14) leads into the milk duct (4).

## Revendications

1. Mousseur à lait (2) avec
- un canal à lait (4) pour guider le lait (10) dans une direction d'écoulement de lait (28) depuis un récipient à lait (6) vers une tête de sortie de lait (8),
- une section moussante (16) pour convertir le lait (10) dans le canal à lait (4) en un air (20) contenant de la mousse de lait (12), et un élément de trempe (24) pour tempérer la mousse de lait (12) à partir de la section moussante (16),
**caractérisé par**
- un conduit de retour (26) qui dérive du conduit de lait (4) entre l'élément de contrôle de température (24) et la tête de sortie de lait (8) et, vu dans le sens d'écoulement du lait (28), mène à un point dans le conduit de lait (4) devant l'élément de contrôle de température (24).

2. Mousseur à lait (2) selon la revendication 1, comprenant un élément d'arrêt (34) qui est configuré pour fermer le conduit de retour (12).

3. Mousseur à lait (2) selon la revendication 2, dans lequel l'élément d'arrêt (34) est un élément interrupteur (34) pour guider la mousse de lait (12) soit vers la tête de sortie de lait (8) soit dans le conduit de retour (12).

4. Mousseur à lait (2) selon la revendication 3, comprenant un autre élément de commutation (36) qui est configuré pour ouvrir le canal de lait (4) soit vers le canal de retour (26) soit vers le réservoir à lait (6).

5. Mousseur à lait (2) selon la revendication 3 ou 4, dans lequel l'élément de commutation (34) et/ou l'autre élément de commutation (36) est une vanne à trois voies.

6. Mousseur à lait (2) selon la revendication 5, dans lequel la valve à trois voies (34, 36) est magnétique.

7. Mousseur à lait (2) selon l'une quelconque des revendications précédentes, dans lequel dans la section moussante (16) dans le canal à lait (4) débouche une conduite d'air (21) pour enrichir le lait (10) en air (20).

8. Mousseur à lait selon la revendication 7, dans lequel la section moussante (16) dans le sens d'écoulement du lait (28) après la conduite d'air (21) comprend un élément tourbillonnant (14) pour faire tourbillonner l'air (20) dans le lait (10).

9. Mousseur à lait (2) selon la revendication 8, dans lequel le conduit de retour (26) entre la conduite d'air (21) et l'élément tourbillonnant (14) débouche dans le conduit de lait (4).
